Europäisches Patentamt

European Patent Office

Office européen des brevets

(11) Numéro de publication : **0 412 906 B1**

(12) **FASCICULE DE BREVET EUROPEEN**

(45) Date de publication du fascicule du brevet :
09.03.94 Bulletin 94/10

(51) Int. Cl.$^5$ : **A01N 57/20**

(21) Numéro de dépôt : **90402265.4**

(22) Date de dépôt : **08.08.90**

(54) **Nouvelles utilisations pesticides du bialaphos.**

(30) Priorité : **08.08.89 FR 8910649**

(43) Date de publication de la demande :
**13.02.91 Bulletin 91/07**

(45) Mention de la délivrance du brevet :
**09.03.94 Bulletin 94/10**

(84) Etats contractants désignés :
**AT BE CH DE DK FR GB GR IT LI LU NL SE**

(56) Documents cités :
**FR-A- 2 407 671
CHEMICAL PATENTS INDEX, BASIC ABS-
TRACTS JOURNAL, semaine C26, section C,
20 août 1980, résumé no. 45565, Derwent
Publications Ltd, Londres, GB; & JP-A-55 064
505 (MEIJI SEIKA KAISHA)**

(56) Documents cités :
**PATENT ABSTRACTS OF JAPAN, vol. 11, no.
349 (C-456)[2796], 14 novembre 1987; & JP-
A-62 123 101 (S.D.S. BAIOTETSUKO K.K.) 04-
06-1987
CHEMICAL ABSTRACTS, vol. 107, no. 21, 23
novembre 1987, page 289, résumé no.
193081m, Columbus, Ohio, US; & JP-A-62 123
101 (SDS BIOTECH K.K.) 04-06-1987**

(73) Titulaire : **ROUSSEL-UCLAF
35, Boulevard des Invalides
F-75007 Paris (FR)**

(72) Inventeur : **Benoit, Marc
Le Cannet Est - Pont de l'Etoile
F-13360 Roquevaire (FR)**
Inventeur : **Demoute, Jean-Pierre
Canta Cigalo
F-13390 Auriol (FR)**

(74) Mandataire : **Tonnellier, Marie-José et al
111, route de Noisy B.P. no 9
F-93230 Romainville (FR)**

Jouve, 18, rue Saint-Denis, 75001 PARIS

## Description

La présente invention concerne de nouvelles utilisations pesticides du bialaphos. L'invention a pour objet l'utilisation du bialaphos pour la fabrication de compositions insecticides.

Le bialaphos ou L-2-amino 4-[(hydroxy) (méthyl) phosphinoyl] butyryl-L-alanyl-L-alanine est un produit connu (cf à ce sujet les brevets français 2 147 291 et 2 407 671) pour ses propriétés herbicides commercialisé sous la marque Herbiace [R] (voir également JPA 62123101).

L'utilisation selon l'invention trouve son application dans la lutte contre les insectes parasites des végétaux, des locaux et des animaux à sang chaud.

L'utilisation selon l'invention peut donc permettre notamment de lutter contre les insectes dans le domaine agricole, pour lutter par exemple contre les pucerons, les larves de lépidoptères et les coléoptères.

L'utilisation selon l'invention permet de lutter contre les insectes dans les locaux, pour lutter notamment contre les mouches, les moustiques et les blattes.

L'utilisation selon l'invention permet de lutter contre les insectes parasites des animaux, pour lutter par exemple contre les puces et les poux.

Les compositions destinées à l'utilisation selon l'invention sont préparées selon les procédés usuels de l'industrie agrochimique, ou de l'industrie vétérinaire ou de l'industrie des produits destinés à la nutrition animale.

Ces compositions peuvent se présenter sous forme de poudres, granulés, suspensions, émulsions, solutions pour aérosols, bandes combustibles, appâts ou autres préparations employées classiquement pour l'utilisation de ce genre de composés.

Lorsqu'il s'agit de lutter contre les parasites des animaux, les compositions peuvent être utilisées sous forme de spray, de bains ou encore selon la méthode "pour on".

L'invention a notamment pour objet l'utilisation du bialaphos pour la fabrication de solutions insecticides renfermant de 0,01 à 20 g de principe actif par litre de solution.

L'invention a plus particulièrement pour objet l'utilisation du bialaphos pour la fabrication de compositions insecticides renfermant de 0,1 à 10 g, et de préférence de 0,5 à 5 g de principe actif par litre de solution.

L'utilisation selon l'invention permet de lutter d'une manière particulièrement efficace contre les lépidoptères et notamment les SPODOPTERA comme le montrent les résultats biologiques exposés ci-après dans la partie expérimentale.

L'utilisation selon l'invention présente également l'avantage de lutter efficacement contre les insectes résistants aux pyréthrinoïdes.

Parmi les utilisations préférées, on peut également citer l'utilisation pour la fabrication de compositions destinées à la lutte des insectes parasites des animaux, se présentant sous forme de solution renfermant de 1 g à 20 g de principe actif par hectolitre de solution par exemple de 2 à 6 g de principe actif par hectolitre de solution.

Lorsque les compositions sont destinées à des traitements agricoles, elles sont utilisées à des doses allant de 1 à 1000 g de principe actif par hectare.

L'invention a également pour objet l'utilisation du bialaphos pour la fabrication d'associations douées d'activité insecticides caractérisées en ce qu'elles contiennent comme matière active d'une part du bialaphos et d'autre part au moins un des esters pyréthrinoïdes choisis dans le groupe constitué par les esters d'alléthrolone, d'alcool 3,4,5,6-tétrahydrophtalimidométhylique, d'alcool 5-benzyl 3-furyl méthylique, d'alcool 3-phénoxy benzylique et d'alcools alpha-cyano benzyliques des acides chrysanthémiques, par les esters d'alcool 5-benzyl 3-furyl méthylique des acides 2,2-diméthyl 3-(3-oxo 3,4,5,6-tétrahydrothiophénylidène méthyl) cyclopropane 1-carboxylique, par les esters d'alcool 3-phénoxy benzylique et d'alcools alpha-cyano 3-phénoxy benzyliques des acides 2,2-diméthyl 3-(2,2-dichlorovinyl) cyclopropane 1-carboxyliques, par les esters d'alcools alpha-cyano 3-phénoxy benzylique d'acides 2,2-diméthyl 3-(2,2-dibromovinyl) cyclopropane 1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophtalimido méthylique, d'alcool 5-benzyl 3-furyl méthylique, d'alcool 3-phénoxy benzylique et d'alcools alpha-cyano 3-phénoxy benzylique des acides 2,2-diméthyl 3-(1,2,2,2-tétrahaloéthyl) cyclopropane 1-carboxyliques, dans lesquels "halo" représente un atome de fluor, de chlore ou de brome, étant entendu que les copules acides et alcools des esters pyréthrinoïdes ci-dessus peuvent exister sous toutes leurs formes stéréoisomères possibles.

Les exemples suivants illustrent l'invention sans toutefois la limiter.

I - Exemples de compositions destinées à l'utilisation selon l'invention.

A) On a préparé une solution insecticide renfermant 1 g de bialaphos par litre de solution.

B) On a préparé une solution insecticide renfermant 0,5 g de bialaphos par litre de solution.

II - Etude de l'effet létal sur larves de SPODOPTERA LITTORALIS.

Les essais sont effectués par application topique d'un microlitre d'une solution acétonique à l'aide du micro manipulateur d'Arnold sur le thorax dorsal des larves. On utilise 15 larves par dose de produit à tester. Les larves utilisées sont des larves du quatrième stade larvaire, c'est-à-dire âgées d'environ 10 jours lorsqu'elles sont élevées à 24°C et 65% d'humidité relative. Après traitement les individus sont placés sur un milieu nutritif artificiel (milieu de Poitout). On effectue le contrôle des mortalités après traitement.

A) Les résultats expérimentaux obtenus sont résumés dans le tableau suivant :

| Doses g/l | % de mortalité à | | | | |
|---|---|---|---|---|---|
| | 1 j | 2 j | 3 j | 4 j | 5 j |
| 10 | 13 | 100 | 100 | 100 | 100 |
| 1 | 0 | 100 | 100 | 100 | 100 |
| 0,1 | 0 | 7 | 10 | 37 | 70 |
| 0,01 | 3 | 7 | 7 | 7 | 20 |
| Témoin | 0 | 7 | 13 | 13 | 13 |

B) On a recommencé le même essai qu'au paragraphe A avec une souche de SPODOPTERA LITTORALIS fortement résistante à la deltaméthrine (sur laquelle 10 g/l de deltaméthrine ne provoque qu'une mortalité partielle). Les résultats obtenus sont les suivants :

| Doses g/l | % de mortalité à | | | |
|---|---|---|---|---|
| | 1 j | 2 j | 3 j | 4 j |
| 10 | 37 | 63 | 100 | 100 |
| 1 | 3 | 10 | 83 | 93 |
| 0,1 | 10 | 17 | 23 | 43 |

Nous constatons qu'il n'y a quasiment pas de différence dans l'activité du produit entre la souche sensible et la souche résistante de Spodoptera Littoralis.

## Revendications

1. Utilisation du bialophos pour la fabrication de compositions insecticides.

2. Utilisation selon la revendication 1 pour la fabrication de solutions insecticides renfermant de 0,01 à 20 g de principe actif par litre de solution.

**3.** Utilisation selon la revendication 1 ou 2 pour la fabrication de compositions insecticides renfermant de 0,1 à 10 g de principe actif par litre de solution.

**4.** Utilisation selon la revendication 3 pour la fabrication de compositions insecticides renfermant de 0,5 à 5 g de principe actif par litre de solution.

**5.** Utilisation selon l'une quelconque des revendications 1 à 4 pour la fabrication de compositions insecticides destinées à la lutte contre les lépidoptères et notamment les SPODOPTERA.

**6.** Utilisation selon la revendication 1 pour la fabrication de compositions insecticides, destinées à la lutte des insectes parasites des animaux, se présentant sous forme de solution renfermant de 1 g à 20 g de principe actif par hectolitre de solution.

**7.** Utilisation selon la revendication 6 pour la fabrication de compositions insecticides renfermant de 2 à 6 g de principe actif par hectolitre de solution.

**8.** Utilisation selon la revendication 1 pour la fabrication d'associations douées d'activité insecticide contenant comme matière active d'une part du bialaphos et d'autre part au moins un des esters pyréthrinoïdes choisis dans le groupe constitué par les esters d'alléthrolone, d'alcool 3,4,5,6-tétrahydrophtalimidométhylique, d'alcool 5-benzyl 3-furyl méthylique, d'alcool 3-phénoxy benzylique et d'alcools alpha-cyano benzyliques des acides chrysanthémiques, par les esters d'alcool 5-benzyl 3-furyl méthylique des acides 2,2-diméthyl 3-(3-oxo 3,4,5,6-tétrahydrothiophénylidène méthyl) cyclopropane 1-carboxylique, par les esters d'alcool 3-phénoxy benzylique et d'alcools alpha-cyano 3-phénoxy benzyliques des acides 2,2-diméthyl 3-(2,2-dichlorovinyl) cyclopropane 1-carboxyliques, par les esters d'alcools alpha-cyano 3-phénoxy benzylique d'acides 2,2-diméthyl 3-(2,2-dibromovinyl) cyclopropane 1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophtalimido méthylique, d'alcool 5-benzyl 3-furyl méthylique, d'alcool 3-phénoxy benzylique et d'alcools alpha-cyano 3-phénoxy benzylique des acides 2,2-diméthyl 3-(1,2,2,2-tétrahaloéthyl) cyclopropane 1-carboxyliques, dans lesquels "halo" représente un atome de fluor, de chlore ou de brome, étant entendu que les copules acides et alcools des esters pyréthrinoïdes ci-dessus peuvent exister sous toutes leurs formes stéréoisomères possibles.

**9.** Utilisation selon l'une quelconque des revendications 1 à 8, pour la fabrication de compositions insecticides destinées à des traitements agricoles à raison de 1 à 1000 g de principe actif par hectare.

## Patentansprüche

**1.** Verwendung von Bialaphos zur Herstellung von insektiziden Zusammensetzungen.

**2.** Verwendung nach Anspruch 1 zur Herstellung von insektiziden Lösungen. die 0.01 g bis 20 g Wirkstoff pro Liter Lösung umfassen.

**3.** Verwendung nach Anspruch 1 oder 2 zur Herstellung von insektiziden Zusammensetzungen, die 0.1 g bis 10 g Wirkstoff pro Liter Lösung umfassen.

**4.** Verwendung nach Anspruch 3 zur Herstellung von insektiziden Zusammensetzungen, die 0.5 g bis 5 g Wirkstoff pro Liter Lösung umfassen.

**5.** Verwendung nach irgendeinem der Ansprüche 1 bis 4 zur Herstellung von insektiziden Zusammensetzungen, die zur Bekämpfung der Lepidoptera und insbesondere der SPODOPTERA bestimmt sind.

**6.** Verwendung nach Anspruch 1 zur Herstellung von insektiziden Zusammensetzungen. die zur Bekämpfung von parasitären Insekten bei Tieren bestimmt sind, und die in Form einer Lösung vorliegen. die 1 g bis 20 g Wirkstoff pro Hektoliter Lösung umfassen.

**7.** Verwendung nach Anspruch 6 zur Herstellung von insektiziden Zusammensetzungen, die 2 g bis 6 g Wirkstoff pro Hektoliter Lösung umfassen.

**8.** Verwendung nach Anspruch 1 zur Herstellung von Assoziationen mit insektizider Aktivität, die als Wirkstoff einerseits Bialaphos und andererseits mindestens einen der Pyrethrinoid-Ester enthalten, ausgewählt aus der Gruppe, bestehend aus den Estern von Allethrolon, 3,4,5,6-Tetrahydrophthalimidomethylalkohol, 5-Benzyl-3-furylmethylalkohol, 3-Phenoxy-benzylalkohol und α-Cyano-benzylalkoholen mit den Chrysanthemumsäuren, aus den Estern von 5-Benzyl-3-furylmethylalkohol mit den 2,2-Dimethyl-3-(3-oxo-3,4,5,6-tetrahydrothiophenyliden-methyl)-cyclopropan-1-carbonsäuren, aus den Estern von 3-Phenoxy-benzylalkohol und α-Cyano-3-phenoxy-benzylalkoholen mit den 2,2-Dimethyl-3-(2,2-dichlorvinyl)-cyclopropan-1-carbonsäuren, aus den Estern von α-Cyano-3-phenoxy-benzylalkoholen mit den 2,2-Dimethyl-3-(2,2-dibromvinyl)-cyclopropan-1-carbonsäuren, aus den Estern von 3-Phenoxy-benzylalkohol mit den 2-p-Chlorphenyl-2-isopropyl-Essigsäuren, aus den Estern von Allethrolonen, 3,4,5,6-Tetrahydrophthalimidomethylalkohol. 5-Benzyl-3-furylmethylalkohol, 3-Phenoxybenzylalkohol und α-Cyano-3-phenoxy-benzylalkoholen mit den 2,2-Dimethyl-3-(1,2,2,2-tetrahaloethyl)-cyclopropan-1-carbonsäuren, in denen "halo" ein Fluor-, Chlor- oder Bromatom darstellt, mit der Maßgabe, daß die Kupplungsprodukte von Säure und Alkohol der obengenannten Pyrethrinoid-Ester in allen ihren möglichen stereoisomeren Formen existieren können.

9. Verwendung nach irgendeinem der Ansprüche 1 bis 8 zur Herstellung von insektiziden Zusammensetzungen, die zur landwirtschaftlichen Behandlung im Verhältnis von 1 g bis 1000 g Wirkstoff pro Hektar bestimmt sind.

## Claims

1. Use of bialaphos for the production of insecticide compositions.

2. Use according to claim 1 for the production of insecticide solutions containing 0.01 to 20 g of active ingredient per litre of solution.

3. Use according to claim 1 or 2 for the production of insecticide compositions containing 0.1 to 10 g of active ingredient per litre of solution.

4. Use according to claim 3 for the production of insecticide compositions containing 0.5 to 5 g of active ingredient per litre of solution.

5. Use according to any one of claims 1 to 4 for the production of insecticide compositions intended for combating Lepidoptera and in particular SPODOPTERA.

6. Use according to claim 1 for the production of insecticide compositions, intended for combating parasitic insects of animals, being presented in the form of a solution containing 1 g to 20 g of active ingredient per hectolitre of solution.

7. Use according to claim 6 for the production of insecticide compositions containing 2 to 6 g of active ingredient per hectolitre of solution.

8. Use according to claim 1 for the production of combinations endowed with insecticide activity containing as active ingredient on the one hand bialaphos and on the other hand at least one of the pyrethrinoid esters chosen from the group constituted by the esters of allethrolone, of 3,4,5,6-tetrahydrophthalimidomethyl alcohol, of 5-benzyl-3-furyl methyl alcohol, of 3-phenoxybenzyl alcohol and of alpha-cyano benzyl alcohols with chrysanthemic acids, by the esters of 5-benzyl-3-furyl methyl alcohol with 2,2-dimethyl-3-(3-oxo-3,4,5,6-tetrahydrothiophenylidenemethyl)-cyclopropane-1-carboxylic acids, by the esters of 3-phenoxybenzyl alcohol and of alpha-cyano-3-phenoxybenzyl alcohols with 2,2-dimethyl-3-(2,2-dichlorovinyl)-cyclopropane-1-carboxylic acids, by the esters of alpha-cyano-3-phenoxy-benzyl alcohols with 2,2-dimethyl-3-(2,2-dibromovinyl)-cyclopropane-1-carboxylic acids, by the esters of 3-phenoxybenzyl alcohol with 2-parachlorophenyl-2-isopropyl acetic acids, by the esters of allethrolone, of 3,4,5,6-tetrahydrophthalimidomethyl alcohol, of 5-benzyl-3-furyl methyl alcohol, of 3-phenoxybenzyl alcohol, and of alpha-cyano-3-phenoxybenzyl alcohols with 2,2-dimethyl-3-(1,2,2,2-tetrahaloethyl)-cyclopropane-1-carboxylic acids, in which "halo" represents a fluorine, chlorine or bromine atom, it being understood that the acid and alcohol copulas of the above pyrethrinoid esters can exist in all their possible stereoisomer forms.

9. Use according to any one of claims 1 to 8, for the production of insecticide compositions intended for agricultural treatments at a rate of 1 to 1000 g of active ingredient per hectare.